# EUROPEAN PATENT APPLICATION

(11) **EP 1 381 240 A2**
(43) Date of publication of application: **14.01.2004**
(21) Application number: 03254157.5
(22) Date of filing: 30.06.2003
(51) Int. Cl.: H04N 9/28, H04N 9/31

(54) **Apparatus and method for controlling CRT focusing in a projection television**

(30) Priority: 12.07.2002 KR 2002040673
(71) Applicant: SAMSUNG ELECTRONICS Co. Ltd., Kyungki-do, Seoul (KR)
(72) Inventor: Hwang, Gyu-hwan, Taean-eub Hwaseong-si Gyeonnggi-do (KR); Lee, Suk-sun, Dongan-gu Anyang-si Gyeonggi-do (KR); Min, Jong-sul, Taean-eub Hwaseong-si Gyeonnggi-do (KR); Ryu, Il-hyeon 601-801 Sinnamusil Poonglim Apt, Suwon-si Gyeonggi-do (KR); Lim, Nam-gyu, Paldal-gu Suwon-si Gyeonggi-do (KR)
(74) Representative: Geary, Stuart Lloyd

(57) **Abstract**

Provided are an apparatus and method for controlling CRT focusing in a television, and more particularly, an apparatus and method for separately controlling focusing of R, G, and B cathode ray tubes in a television using a triple tube type optical system based on a digital method. The apparatus includes a memory, a controller, and an R/G/B focusing correction signal generator. The memory stores focusing correction data of R, G, and B cathode ray tubes for a position of a screen. The controller reads and outputs the focusing correction data of the R, G, and B cathode ray tubes from the memory for the position of the screen, based on horizontal and vertical synchronization signals. The R/G/B focusing correction signal generator calculates the focusing correction data of the R, G, and B cathode ray tubes read from the memory and generates R, G, and B analog focusing correction signals that will be applied to R, G, and B coils.

## Description

The present invention relates to projection television comprising a screen, a cathode ray tube for generating image component for display on the screen and a focusing correction signal generator for generating an correction signal output, the correction signal output of the focusing correction signal generator being supplied to a focus coil of the cathode ray tube for squaring the image displayed thereby on the screen. "Squaring"

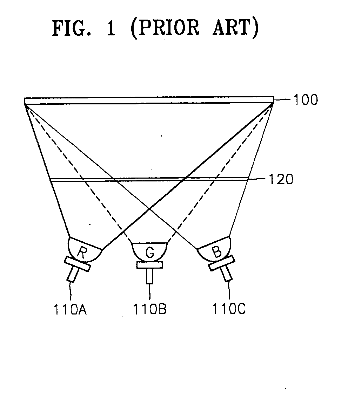

Projection televisions using a triple-tube-type projection system include cathode ray tubes (CRTs) which produce red, green and blue colour images respectively. The images on the CRTs' screens are projected onto a single display screen. However, as shown in Figure 1, the projection distances and the projection angles from the red, green and blue CRTs 110A, 110B, 110C through a mirror 120 to the screen 100 are different resulting in phase distortion in the image on the screen 100. A CRT focusing correction apparatus has been developed to solve this phase distortion problem.

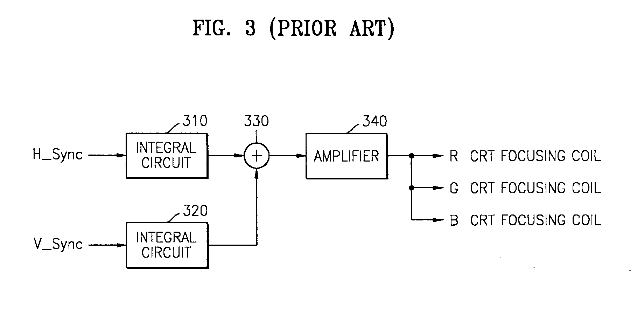

As shown in Figure 3, a prior art CRT focusing correction apparatus includes first and second integrators 310, 320, an adder 330 and an amplifier 340.

The first and second integrators 310, 320 integrate the horizontal synchronization signal H_Sync and the vertical synchronization signal V_Sync, respectively. The adder 330 adds signals output from the first and second integrators 310, 320 to generate a parabola waveform. The amplifier 340 amplifies the focusing correction signal having the parabola waveform and applies the focusing correction signal to the focusing coils of red, green and blue CRTs so that CRT focusing is corrected.

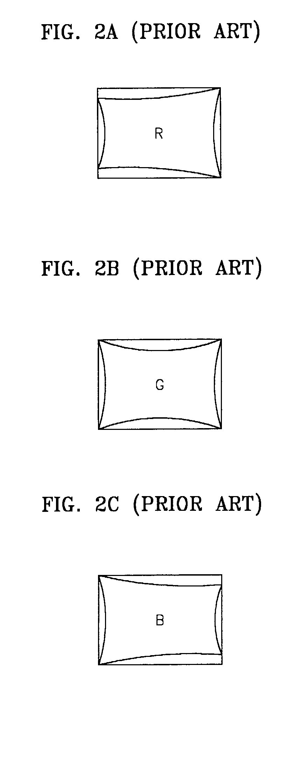

However, as shown in Figure 1, the projection distances and the projection angles from the red, green and blue CRTs 110A, 110B, 110C to the screen 100 are different because of their different positions relative to the screen 100. Thus, images output from the red, green and blue CRTs 110A, 110B, 110C are distorted as shown in Figures 2 (A) - (C).

With the prior art CRT focusing correction apparatus, although the projection distances and the projection angles from the red, green and blue CRTs 110A, 110B, 110C to the screen 100 are different depending on the positions of the red, green and blue CRTs 110A, 110B, and 110C from the screen 100, focusing of the red, green and blue CRTs 110A, 110B, 110C is corrected to a degree by a focusing correction signal having a single parabola waveform. However, CRT focusing cannot be precisely controlled in this way and since the technique is analogue, the parabola waveform used for focusing control varies with the time constant values of the integrators.

In general, CRT focusing correction is performed by employing the above-mentioned correction by a circuit and correction by an optical system. In the case where the magnitude of correction operation by the circuit is small or inaccurate, the optical system has to precisely correct focusing. Thus, an optical system of a projection television according to the prior art requires a larger number of lenses to compensate for the insufficient correction of CRT focusing by the circuit. Also, since each of the lenses has to have a precise curvature, the optical system is complicated and costs for components thereof increases.

A projection television according to the present invention is characterised in that the focusing correction signal generator comprises means for generating digital horizontal and vertical correction values in dependence on the current pixel and means for generating an analogue correction signal from said digital values.

Preferably, the projection television will include a memory storing focusing correction data and the focusing correction signal generator uses the focusing correction data stored in the memory to generate said digital values.

More preferably, the focusing correction data comprises a seed value and the focusing correction signal generator is configured to calculate said digital values in dependence on said seed value and the current pixel.

More preferably, the projection apparatus will have three cathode ray tubes, the memory will store respective focusing correction data for each of the cathode ray tubes and the focusing correction signal generator will comprise means for generating digital horizontal and vertical correction values for each of the cathode ray tubes, and the focusing correction data will have been set in dependence on the relative positions of the cathode ray tube and the screen.

An embodiment of the present invention will now be described, by way of example, with reference to Figures 4 to 6A of the accompanying drawings, in which:
Figure 1 shows the CRTs and screen of a projection television;
Figure 2 illustrates the states of pictures projected onto a screen by the red, green and blue CRTs shown in Figure 1;
Figure 3 shows a prior art CRT focusing correction apparatus;
Figure 4 is a block diagram of a projection television using a CRT focusing correction apparatus according to the present invention;
Figure 5 is a detailed circuit diagram of the red, green and blue focusing correction signal generator shown in Figure 4;
Figure 6A shows an optical system according to the present invention; and
Figure 6B shows a prior art optical system.

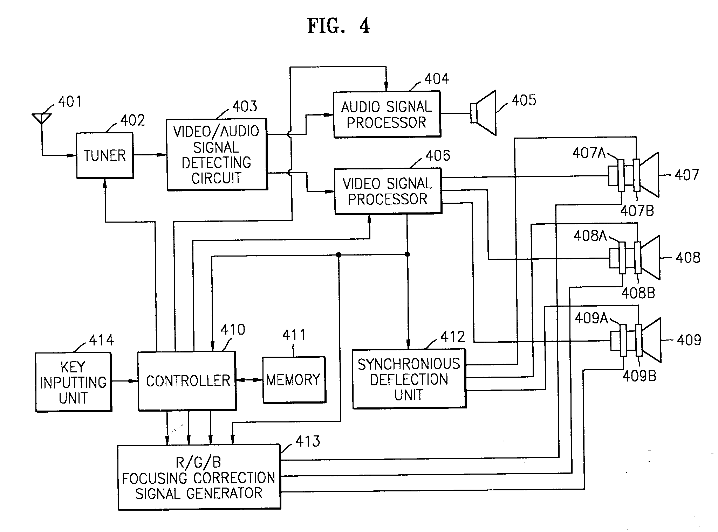

Referring to Figure 4, a projection television includes an antenna 401, a tuner 402, a video/audio signal detecting circuit 403, an audio signal processor 404. a speaker 405, a video signal processor 406, red, green and blue CRTs 407, 408, 409, a controller 410, a memory 411, a synchronous deflection unit 412, a red, green and blue focusing correction signal generator 413 and a key inputting unit 414.

The red, green and blue CRTs 407, 408, 409 have respective focusing coils 407A, 408A, 409A and deflection coils 407B, 408B, 409B.

The basic operation of the projection television will now be described.

When the projection television is turned on using a button on a key input unit 414 and a channel to be viewed is selected, the controller 410 generates a channel control signal used for tuning to the selected channel. The tuner 402 responds to the channel control signal to select only the broadcasting signal of the channel selected by the user from the broadcasting signals received via the antenna 401 and outputs the selected broadcasting signal. Then, the video/audio signal detecting circuit 403 detects the audio and video components in the signal output from the tuner 402 and outputs the audio and video components as separate audio and video signals to the audio signal processor 404 and the video signal processor 406 respectively. The audio signal processor 404 removes noise from the audio signal and compensates for the frequency characteristics of the audio signal and then outputs the audio signal to the speaker 405. The video signal processor 406 removes noise from the video signal and performs gamma correction, converts the video signal to red, green and blue signals, and outputs the red, green and blue signal to the red, green and blue CRTs 407, 408, 409 respectively. Electron beams generated in the red, green and blue CRTs 407, 408, 409 are deflected by a deflection voltage generated by the synchronous deflection unit 412 and hit a screen (not shown). Focusing correction signals, generated by the red, green and blue focusing correction signal generator 413, are applied to red, green and blue focusing coils 407A, 408A, 409A to correct the focusing of the red, green and blue CRTs 407, 408, 409.

The correction of CRT focusing according to the present invention will now be described in detail.

The memory 411 stores focusing correction data for the red, green and blue CRTs 407, 408, 409 for each position on the screen. The focusing correction data includes focusing correction data synchronized with a horizontal synchronization signal and focusing correction data synchronized with a vertical synchronization signal.

The memory 411 may store focusing correction data corresponding to all pixel positions of the screen. However, preferably, the memory 411 stores only focusing correction data for a specific seed point and calculates focusing correction data for all other points on the screen using the focusing data for the seed point, so that capacity of the memory 411 can be efficiently reduced. In the present embodiment, a technique for correcting CRT focusing using correction data for a seed point is used.

The controller 410 receives a horizontal synchronization signal H_Sync and a vertical synchronization signal V_Sync output from the video signal processor 406, reads focusing correction data of each of the red, green and blue CRTs 407, 408, 409 from the memory 411. The focusing correction data is synchronized with the horizontal signal H_Sync at every position on the screen and with the vertical signal V_Sync at every position on the screen. The read focusing correction data is output by the controller 410 to the red, green and blue correction signal generator 413.

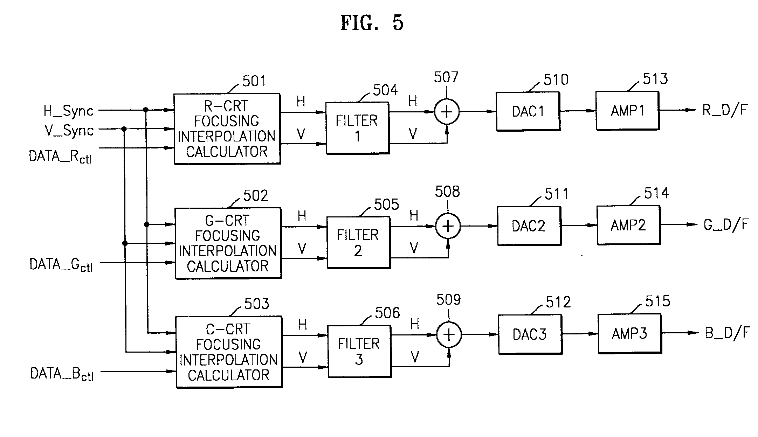

The operation of the red, green and blue focusing correction signal generator 413 will now be described with reference to Figure 5.

Referring to Figure 5, the red, green and blue focusing correction signal generator 413 includes red, green and blue CRT focusing interpolation calculators 501, 502, 503, first, second and third filters 504, 505, 506, adders 507, 508, 509, first, second and third digital-to-analogue converters (DACs) 510, 511, 512, and first, second and third amplifiers 513, 514, 515.

The horizontal synchronization signal H_Sync and the vertical synchronization signal V_Sync are applied to the red, green and blue CRT focusing interpolation calculators 501, 502, 503. Focusing correction seed data Data_Rctl, Data_Gctl, and Data_Bctl, which is read from the memory 411 by the controller 410 and synchronized with the horizontal synchronization signal H_Sync and the vertical synchronization signal V_Sync, is input into the red, green and blue CRT interpolation calculators 501, 502, 503.

The red, green and blue CRT focusing interpolation calculators 501, 502, 503 calculate using the input focusing correction seed data Data_Rctl, Data_Gctl, and Data_Bctl, according to a predetermined interpolation calculation equation, and obtain horizontal/vertical focusing correction data for all positions on the screen. The predetermined interpolation calculation equation may be an average interpolation calculation equation.

In the event that the memory 411 stores focusing correction data for all pixels of the screen, the red, green and blue CRT focusing interpolation calculators 501, 502, 503 are omitted, and the horizontal/vertical focusing correction data, synchronized with the horizontal synchronization signal H_Sync and the vertical synchronization signal V_Sync, is directly input into the first, second and third filters 504, 505, 506.

The first, second, and third filters 504, 505, 506 filter noise from the focusing correction data, synchronized with the horizontal synchronization signal H_Sync and the vertical synchronization signal V_Sync.

The adders 507, 508, 509 add the horizontal focusing correction data and the vertical focusing data output from the first, second, and third filters 504, 505, 506 respectively.

The first, second and third DACs 510, 511, 512 convert the mixed focusing correction data of the mixers 507, 508, 509 to an analog signal. The first, second, and third amplifiers 513, 514, 515 amplify the analogue signals to generate red, green and blue dynamic focusing correction signals R_D/F, G_D/F, and B_D/F that are applied to the red, green and blue focusing coils 407A, 408A, 409A.

In the above-described circuit, focusing of red, green and blue CRTs can be separately corrected in a television using a triple-tube-type projection system.

A method of correcting CRT focusing according to the present invention will now be described.

First, the focusing correction data for each screen position is determined for red, green and blue CRTs and stored in a memory. The focusing correction data is determined at design time.

The focusing correction data for the red, green and blue CRTs for each screen position is read from the memory based on horizontal and vertical synchronization signals.

The focusing correction data for the red, green and blue CRTs is interpolated and the focusing correction data synchronized with the horizontal synchronization signal and the focusing correction data synchronized with the vertical synchronization signal are added.

The results of the additions are converted from digital to analogue signals to generate a parabola focusing correction signal that will be applied to focusing coils of the red, green and blue CRTs.

Focusing of red, green and blue CRTs can be separately controlled by the process described above. If a memory is designed to store focusing correction data in all pixels of a screen, the interpolation is omitted.

By separately controlling focusing of red, green and blue CRTs according to a digital method, the configuration of lenses of an optical system can be remarkably simplified.

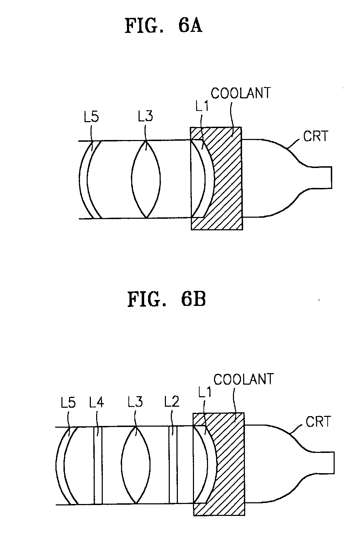

In other words, as shown in Figure 6B, a conventional optical system of a projection television, which uses a focusing controlling apparatus for integrally controlling focusing of red, green and blue CRTs according to a digital method, requires at least five lenses for correcting chromatic aberration including a power lens L3. Each of the lenses has to be manufactured at a high precision.

In contrast, by precisely correcting CRT focusing using the apparatus according to the present invention, the curvature shape of a lens can be simplified by alleviating the correction degree of focusing in an optical system. Also, efficiency for correcting focusing can be improved by using only three lenses including the power lens L3 to compensate for chromatic aberration, compared with the prior art. Thus, in the optical system of a projection television according to the present invention, the number of lenses can be reduced compared to the prior art.

As described above, by separately correcting focusing of red, green and blue CRTs according to the digital method according to the present invention, focusing can be precisely corrected at every position of a screen. Also, the number of lenses constituting an optical system can be reduced compared with the prior art and the curvature shape of the lenses can be simplified, thereby allowing easy manufacturing of the lenses.

The present invention can be realized as a method, an apparatus, a system, and so forth. When the present invention is executed as software, the components of the present invention are code segments, which carry out necessary operations. Programs or code segments may be stored in a processor-readable medium or may be transmitted through a transmission medium or a communication network by a computer data signal combined with a carrier wave. The processor-readable medium includes any media, which can store or transmit information. The process-readable medium includes an electronic circuit, a semiconductor memory device, a ROM, a flash memory, a E²PROM, a floppy disc, an optical disc, a hard disc, an optical fiber medium, a radio frequency (RF) network, and the like. The computer data signal includes any signals, which can be transmitted over the transmission medium, such as an electronic network channel, an optical fiber, air, an electronic system, the RF network, or the like.

## Claims

1. A projection television comprising a screen, a cathode ray tube (407) for generating image component for display on the screen and a focusing correction signal generator (413) for generating an correction signal output, the correction signal output of the focusing correction signal generator (413) being supplied to a focus coil (407B) of the cathode ray tube (407) for squaring the image displayed thereby on the screen, **characterised in that** the focusing correction signal generator (413) comprises means (501) for generating digital horizontal and vertical correction values in dependence on the current pixel and means (507, 510) for generating an analogue correction signal from said digital values.

2. A projection television according to claim 1, including a memory (411) storing focusing correction data, wherein the focusing correction signal generator uses the focusing correction data stored in the memory to generate said digital values.

3. A projection television according to claim 2, wherein the focusing correction data comprises a seed value and the focusing correction signal generator (413) is configured to calculate said digital values in dependence on said seed value and the current pixel.

4. A projection television according to claim 2 or 3, having three cathode ray tubes (407, 408, 409), the memory (411) stores respective focusing correction data for each of the cathode ray tubes (407, 408, 409) and the focusing correction signal generator (413) comprises means (501, 502, 503) for generating digital horizontal and vertical correction values for each of the cathode ray tubes, wherein the focusing correction data is set in dependence on the relative positions of the cathode ray tube (407, 408, 409) and the screen.

5. An apparatus for correcting CRT focusing in an image processing system having a triple tube type optical system, the apparatus comprising:
a memory that stores focusing correction data of R, G, and B cathode ray tubes for a position of a screen;
a controller that reads and outputs the focusing correction data of the R, G, and B cathode ray tubes from the memory for the position of the screen based on horizontal and vertical synchronization signals; and
an R/G/B focusing correction signal generator that calculates the focusing correction data of the R, G, and B cathode ray tubes read from the memory and generates R, G, and B analog focusing correction signals that will be applied to R, G, and B coils.

6. The apparatus of claim 5, wherein the focusing correction data stored in the memory is focusing correction seed data that is determined in a predetermined number of seed points on the screen.

7. The apparatus of claim 5, wherein the focusing correction data comprises focusing correction data that is synchronized with the horizontal synchronization signal and focusing correction data that is synchronized with the vertical synchronization signal.

8. The apparatus of claim 5, wherein the R/G/B focusing correction signal generator comprises:
an R/G/B focusing calculator that calculates the focusing correction seed data of the R, G, and B cathode ray tubes read from the memory according to a predetermined interpolation calculation equation, mixes the focusing correction data synchronized with the horizontal synchronization signal and the focusing correction data synchronized with the vertical synchronization signal at every position of the screen, and obtains the focusing correction data of the R, G, and B cathode ray tubes;
a digital-to-analog converter that converts the focusing correction data of the R, G, and B cathode ray tubes output from the R/G/B focusing calculator to an analog signal; and
an amplifier that amplifies the converted analog focusing correction signal to a voltage that will be applied to R, G, and B focusing coils.

9. The apparatus of claim 8, wherein the R/G/B focusing calculator comprises:
R-, G-, and B-cathode ray tube interpolation calculators that interpolation-calculate the horizontally synchronized focusing correction seed data and the vertically synchronized focusing correction seed data of the R, G, and B cathode ray tubes read from the memory;
R, G, and B filters that filter noise from the interpolation-calculated focusing correction seed data; and
R, G, and B mixers that mix and output the horizontally synchronized focusing correction data and the vertically synchronized focusing correction data of the R, G, and B cathode ray tubes output from the R, G, and B filters, respectively.

10. The apparatus of claim 5, wherein the R/G/B focusing correction signal generator comprises:
an R/G/B focusing calculator that calculates the horizontally synchronized focusing correction data and the vertically synchronized focusing correction data of the R, G, and B cathode ray tubes read from the memory and obtains focusing correction data of the R, G, and B cathode ray tubes;
a digital-to-analog converter that converts the focusing correction data of the R, G, and B cathode ray tubes output from the R/G/B focusing calculator to an analog signal; and
an amplifier that amplifies the converted analog focusing correction signal to a voltage that will be applied to R, G, and B focusing coils.

11. The apparatus of claim 10, wherein the R/G/B focusing calculator comprises:
R, G, and B filters that filter noise from the focusing correction data synchronized with the horizontal synchronization signal and the focusing correction data synchronized with the vertical synchronization signal that is read from the memory; and
R, G, and B mixers that mix and output the horizontally synchronized focusing correction data and the vertically synchronized focusing correction data of the R, G, and B cathode ray tubes output from the R, G, and B filters, respectively.

12. A method of correcting CRT focusing in an image processing system having a triple tube type optical system, the method comprising:
(a) determining focusing correction data of R, G, and B cathode ray tubes for a position of a screen and storing the focusing correction data in a memory;
(b) reading the focusing correction data of the R, G, and B cathode ray tubes from the memory for the position of the screen based on horizontal and vertical synchronization signals; and
(c) generating a parabola focusing correction signal that will be applied to focusing coils of the R, G, and B cathode ray tubes by applying the read focusing correction data of the R, G, and B cathode ray tubes to a predetermined calculation equation.

13. The method of claim 12, wherein the focusing correction data stored in the memory is focusing correction seed data that is determined in a predetermined number of seed points on the screen.

14. The method of claim 12, wherein the focusing correction data comprises focusing correction data that is synchronized with the horizontal synchronization signal and focusing correction data that is synchronized with the vertical synchronization signal.

15. The method of claim 12, wherein in step (c), the focusing correction data of the R, G, and B cathode ray tubes synchronized with the horizontal synchronization signal and the focusing correction data of the R, G, and B cathode ray tubes synchronized with the vertical synchronization signal are mixed, and then a parabola focusing correction signal that will be applied to the focusing coils of the R, G, and B cathode ray tubes is generated based on the mixed focusing correction data.

16. The method of claim 12, wherein in step (c), the focusing correction seed data of the R, G, and B cathode ray tubes synchronized with the horizontal synchronization signal and the focusing correction seed data of the R, G, and B cathode ray tubes synchronized with the vertical synchronization signal are interpolation-calculated, the interpolation-calculated focusing correction data synchronized with the horizontal synchronization signal and the interpolation-calculated focusing correction data synchronized with the vertical synchronization signal are mixed, and the parabola focusing correction signal that will be applied to the focusing coils of the R, G, and B cathode ray tubes is based on the mixed focusing correction data.
